(19) Europäisches Patentamt

European Patent Office

Office européen des brevets

(11) Publication number: 0 527 270 B1

## (12) EUROPEAN PATENT SPECIFICATION

(45) Date of publication of patent specification: 24.05.95   (51) Int. Cl.⁶: B63H 25/38

(21) Application number: 91203188.7

(22) Date of filing: 05.12.91

(54) Ship rudder.

(30) Priority: 08.08.91 JP 198130/91

(43) Date of publication of application:
17.02.93 Bulletin 93/07

(45) Publication of the grant of the patent:
24.05.95 Bulletin 95/21

(84) Designated Contracting States:
DE DK ES FR GB IT

(56) References cited:
DE-C- 405 703
DE-C- 911 469
GB-A- 2 111 007
GB-A- 2 156 297

(73) Proprietor: HITACHI ZOSEN CORPORATION
3-28, Nishikujo 5-chome
Konohana-ku,
Osaka 554 (JP)

(72) Inventor: Hikino, Masami, c/o Hitachi Zosen
Corporation
3-28, Nishikujo 5-chome,
Konohana-ku
Osaka (JP)
Inventor: Toya, Motomu, c/o Hitachi Zosen
Corporation
3-28, Nishikujo 5-chome,
Konohana-ku
Osaka (JP)

(74) Representative: Kupecz, Arpad et al
Octrooibureau Los en Stigter B.V.
Postbox 20052
NL-1000 HB Amsterdam (NL)

## Description

FIELD OF THE INVENTION

The present invention relates to a ship rudder according to the preamble of claim 1.

BACKGROUND OF THE INVENTION

As an attempt to obtain thrust by utilizing backwash streams occurring behind the propeller of a ship for propelling the ship, it has been proposed to attach horizontal fins to a rudder plate disposed at the backwash side of the propeller (see GB-A-2.156.297). It has also been known to attach a bulb to the rudder plate. A typical example in the latter case is a costa bulb rudder. Characteristically, the costa bulb rudder is such that a large bulb is mounted to the rudder plate at a position corresponding to the axis of the propeller for propelling the ship, whereby the velocity of water inflow into the propeller is slowed down to thereby enhance propulsive efficiency.

However, this arrangement involves a problem that no large thrust can be obtained because horizontal fins are subject to limitation with respect to their size. Another drawback of the costa bulb rudder is that the bulb attached to the rudder plate is so large that it increases rudder drag and does not always contribute toward improved propulsive efficiency.

SUMMARY OF THE INVENTION

It is a primary object of the invention to provide a ship rudder which eliminates such a problem and which can greatly enhance propulsive efficiency.

In order to accomplish this object, according to the invention there is provided a rudder for a ship in correspondence with claim 1.

According to the above arrangement, a circulating current formed around each horizontal fin which is aerofoil shaped in section produces a composite force comprising a lift occurring in a direction perpendicular to the current and a drag occurring in the direction of the current, which composite force in turn acts upon the horizontal fin. This composite force includes a thrust component for forward movement, which acts to reduce rudder drag and also to reduce hull drag. The thrust component will thus rectify and calm horse-sloe vortices until they have died out. Each horizontal fin is so configured that its angle of inclination (angle of twist) is progressively varied in corresponding relation to the inflow angle of a propeller backwash stream which will vary in proportion to the position away from the axis of the propeller. Therefore, it is possible to obtain a thrust for forward movement more efficiently from the horizontal fin. This provides much improved propulsive efficiency.

BRIEF DESCRIPTION OF THE DRAWINGS

FIG. 1 is a rear view of a ship rudder representing a first embodiment of the invention;
FIG. 2 is an illustration showing angles of inflow of backwash streams behind the propeller at both sides of the rudder in FIG. 1;
FIGS. 3, 4, and 5 are, respectively, side views and a bottom view of the rudder shown in FIG. 1;
FIGS. 6 to 9 are schematic views explanatory of the function of horizontal fins of the rudder shown in FIG. 1;
FIG. 10 is a view showing the results of experiments conducted with respect to the performance of the rudder shown in FIG. 1;
FIGS. 11 and 12 are views showing a ship rudder representing a second embodiment of the invention;
FIGS. 13 to 16 are views showing a ship rudder representing a third embodiment of the invention;
FIGS. 17 to 19 are views showing a ship rudder representing a fourth embodiment of the invention.

DESCRIPTION OF THE PREFERRED EMBODIMENTS

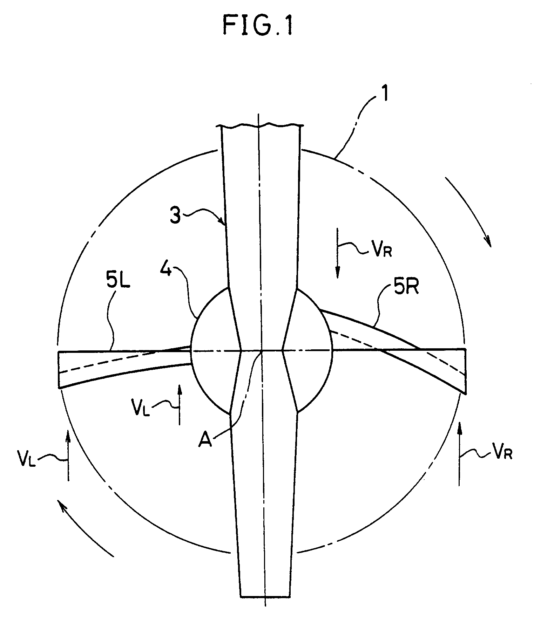

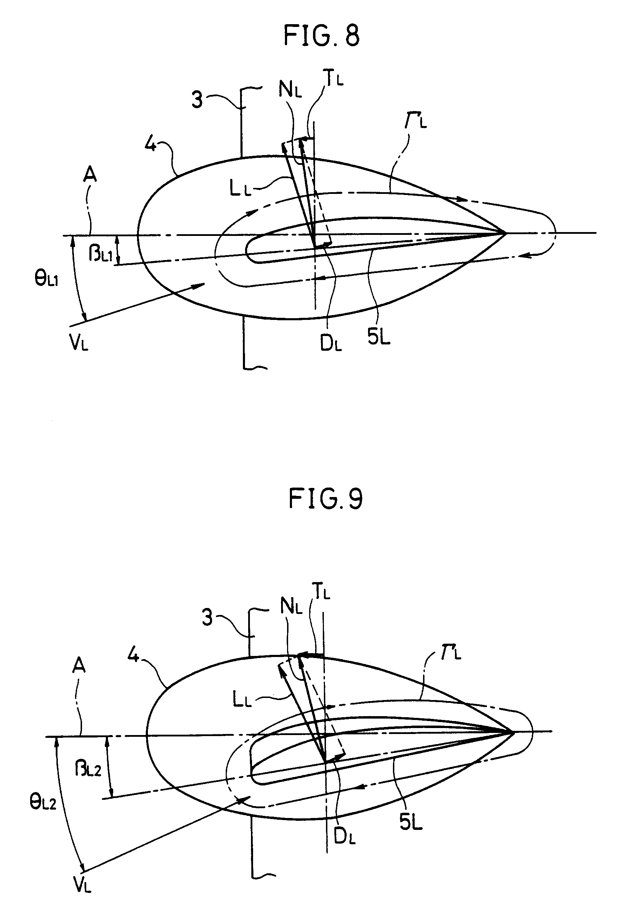

Initially, a first embodiment of the ship rudder according to the invention will be described with reference to FIGS. 1 through 10.

As shown in FIGS. 1 and 3 to 5, at a stern portion of a ship, a rudder 3 is mounted in position through a vertically extending rudder shaft 2 behind a propeller 1 for propelling the ship. A spindle-shaped bulb 4 which is of a circular shape when viewed from the stem side is mounted to that portion of the rudder plate 3 which corresponds to the axis A of the propeller, the front end of the bulb 4 projecting toward the propeller 1. With the bulb 4 alone, it is possible to slow down the velocity of water inflow toward the propeller 1 and also to rectify a turbulent flow of some of free vortices occurring at the backwash side of the propeller 1, or more particularly horse-shoe vortices or so-called hub vortices which occur at root portions of propeller wings.

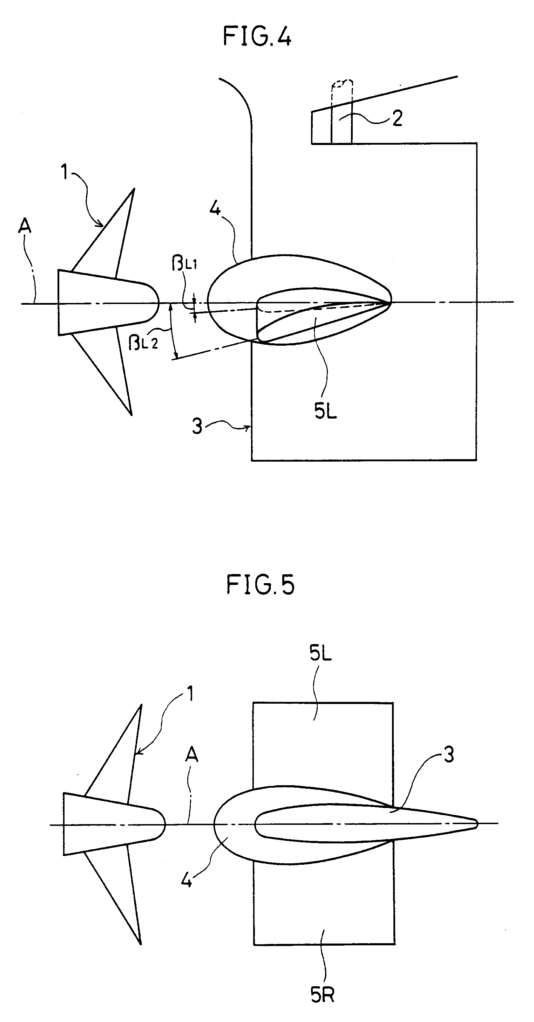

For further enhancement of such effect, according to the invention, the rudder plate 3 is equipped with horizontal fins 5R, 5L. The horizontal fins 5R, 5L has an asymmetric aerofoil section, for example, and are attached to the bulb 4 at both sides thereof. Where the direction of rotation of the propeller 1 is rightward (clockwise), the right-side horizontal fin 5R is so formed that at proximal end side the bulge of its wing is positioned underside and at distal end side the bulge is positioned upside. The left-side horizontal fin 5L is so formed that the bulge of its wing is positioned upside. As shown in FIG. 5, the horizontal fins 5R, 5L are so configured that they are rectangular when viewed in bottom plan.

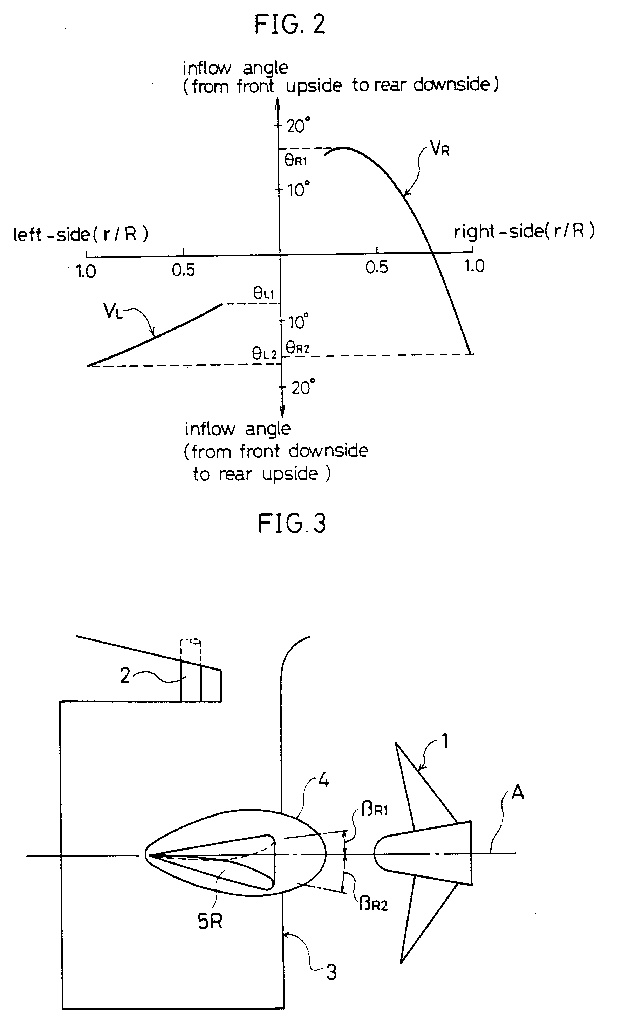

Propeller backwash streams $V_R$, $V_L$ produced by propelling force of the propeller 1 in rightward rotation at right and left sides relative to the rudder plate 3 will vary as they move horizontally sideward from the position of propeller axis A. Right-side propeller backwash stream $V_R$, as shown in FIG. 2, has, at the proximal end side of the horizontal fin 5R, an inflow angle $\theta_{R1}$ (about 17 degrees) leading from front upside to rear downside, the value of which inflow angle $\theta_{R1}$ becomes smaller progressively toward the distal end of the fin and, conversely, at the distal end position the backwash stream $V_R$ has an inflow angle $\theta_{R2}$ (about 15 degrees) leading from front downside to rear upside. Left-side propeller backwash stream $V_L$ has, at the proximal end side of the horizontal fin 5L, an inflow angle $\theta_{L1}$ (about 8 degrees) leading from front downside to rear upside, the value of which inflow angle $\theta_{L1}$ becomes larger progressively toward the distal end of the fin and, at the distal end position, backwash stream $V_L$ has an inflow angle $\theta_{L2}$ of about 17 degrees. In FIG. 2., R designates the radius of the propeller, and r designates position plotted sideward from the propeller axis.

The horizontal fins 5R, 5L are twisted so as to effectively provide forward thrust at any position in corresponding relation to such variations in propeller backwash streams $V_R$, $V_L$. Thus, angles of inclination (twist angles) $\beta_R$, $\beta_L$ of fins 5R, 5L relative to the propeller axis A are varied in the ranges of $\beta_{R1}$ -$\beta_{R2}$ and $\beta_{l1}$ - $\beta_{l2}$ respectively. The respective ranges of inclination angles $\beta_R$, $\beta_L$ (degrees) are as follows:

$$\theta_R \geq \beta_R \geq - 88.1 \times (\, r\,/\,R\,)^2 + 64.2 \times (\, r\,/\,R\,) + 0.4$$
$$\theta_l \geq \beta_l \geq - 2.5 \times (\, r\,/\,R\,)^2 + 16.2 \times (\, r\,/\,R\,) - 1.1$$

It is noted that where the rotation of the propeller 1 is clockwise, inclination angle $\beta_R$ of the horizontal fin 5R is positive on the rear-downwardly inclined side, and inclination angle $\beta_l$ of the horizontal fin 5L is positive on the rear-upwardly inclined side.

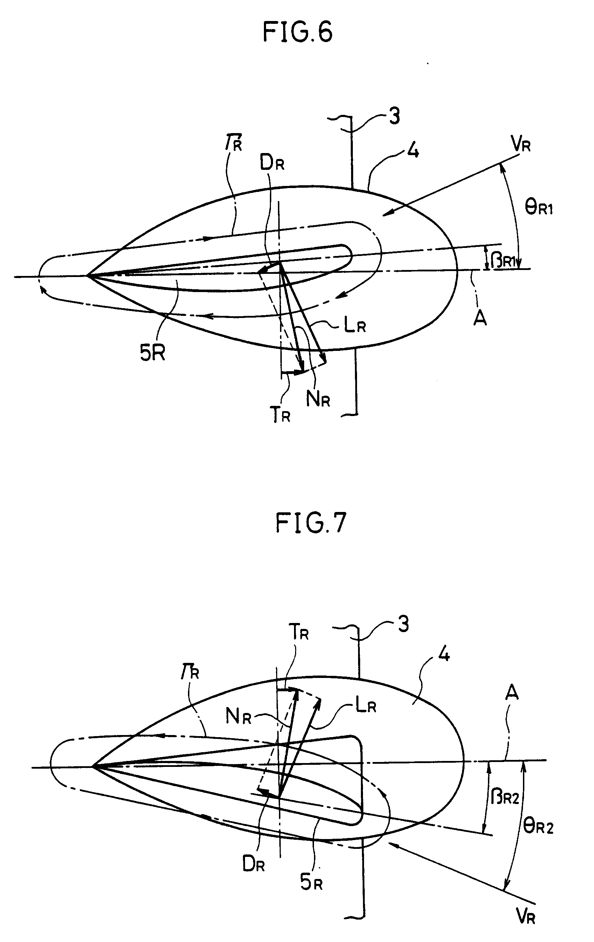

According to the above arrangement, when propeller backwash streams $V_R$, $V_l$ inflow into horizontal fins 5R, 5L respectively at inflow angles $\theta_{R1}$, $\theta_{R2}$; $\theta_{L1}$, $\theta_{L2}$, circulating currents $\Gamma_R$, $\Gamma_L$ are produced by propeller backwash streams $V_R$, $V_l$ as shown in FIGS. 6 to 9. As a consequence, lifts $L_R$,

$L_l$ are produced in directions perpendicular to the propeller backwash streams $V_R$, $V_l$, and at same time drags $D_R$, $D_l$ are produced in directions parallel to the propeller backwash streams $V_R$, $V_l$. In turn, forwardly acting thrusts $T_R$, $T_l$ are produced as component forces of composite forces $N_R$, $N_l$ comprising lifts $L_R$, $L_l$ and drags $D_R$, $D_l$ and they act to reduce rudder drag.

Horizontal fin 5R, 5L may have a symmetrical aerofoil section. In that case, horizontal fin 5R, 5L is mounted in position by arranging that the angle of inclination is varied so that the angle of incidence of propeller backwash stream $V_R$, $V_l$ may be positive.

The bulb 4 serves to expel propeller backwash streams $V_R$, $V_l$ outwardly therefrom to slow down the velocity of water inflow into the propeller 1, and it also acts to rectify the turbulence of some of free vortices occurring in propeller backwash streams $V_R$, $V_l$, or more particularly horse-shoe vortices or so-called hub vortices occurring at proximal end portions of wings of the propeller 1.

As stated above, horizontal fins 5R, 5L having an aerofoil section are capable of producing thrusts $T_R$, $T_l$ and, in addition, they are so twisted as to provide inclination angles $\beta_R$, $\beta_l$ varied from position to position at both proximal end side and distal end side. Therefore, forward thrusts $T_R$, $T_l$ can be effectively drawn from the fins at most positions thereon. With these thrusts $T_R$, $T_l$, therefore, it is possible to reduce rudder drag and also reduce hull drag, and to eliminate hub vortices which have been rectified and calmed. In this way, wake gain and wake equalization, and decrease in hull drag due to decrease rudder drag can be obtained, with the result that propulsive effeciency is enhanced and hull vibration arising from the propeller 1 is reduced.

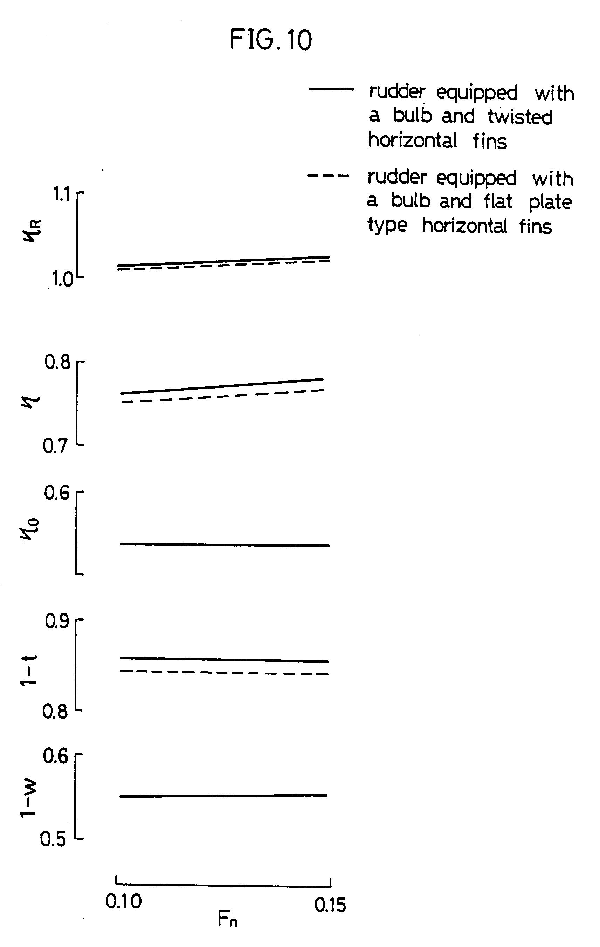

Experiments were carried out with the rudder of the foregoing embodiment which is equipped with bulb 4 and twisted horizontal fins 5R, 5L, in comparison with a prior art rudder equipped with a bulb and a flat plate type horizontal fins. The results are shown in FIG. 10.

In the figure:

t     : coefficient of thrust reduction

w     : wake coefficient

$\eta_R$     : propeller efficiency ratio

$\eta_O$     : propeller efficiency

$\eta$     : total efficiency

As shown, as compared with prior art rudder equipped with a bulb and a flat plate type horizontal fins, the rudder of the invention which is equipped with bulb 4 and twisted horizontal fins 5R, 5L showed:

1 - t : 1.5 % greater,

1 - w and $\eta_O$ : no change, and

$\eta_R$ : slightly greater.

Thus, it was found that an improvement of the following order was obtained in the propulsive efficiency (total efficiency $\eta$) of the ship:

$$\eta = ( 1 - t ) / ( 1 - w ) \times \eta_R \times \eta_O \fallingdotseq 2 \%$$

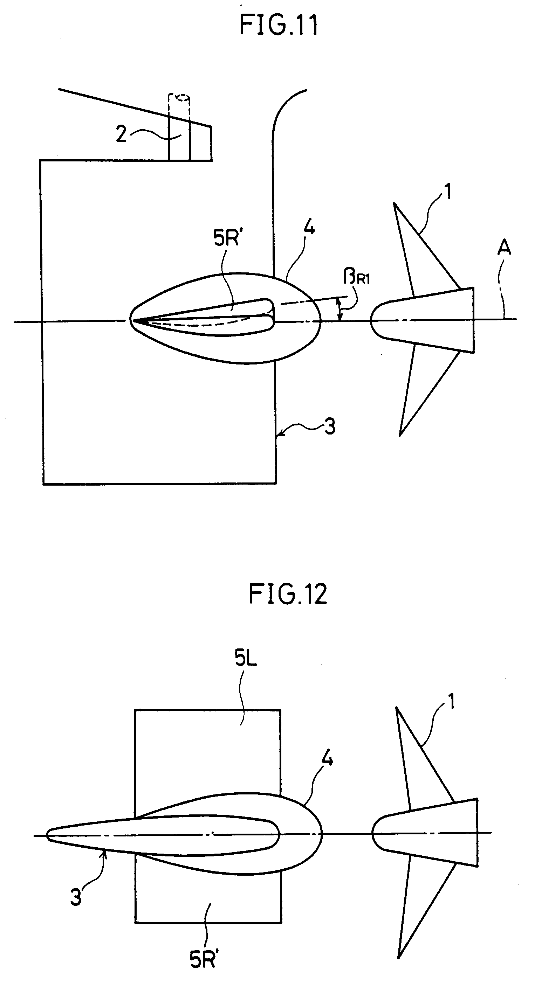

FIGS. 11 and 12 show a second embodiment of the invention. In the foregoing first embodiment, the right-side horizontal fin 5R requires some delicate work in the process of fabrication because the position of the bulge changes from the underside to the upperside at an intermediate portion. This may result in increased cost of fabrication. In order to solve this problem, in this second embodiment, right side horizontal fin 5R' only is designed to be shorter so that the horizontal fin 5R' may be positioned in that portion of propeller backwash stream $V_R$ which flows along an inclined path extending from front upside toward rear downside so that the bulge of the right side horizontal fin 5R' is present underside only. With such right side horizontal fin 5R' constructed shorter, substantially same results as witnessed with the first embodiment were obtained in experiments conducted with the fin 5R'.

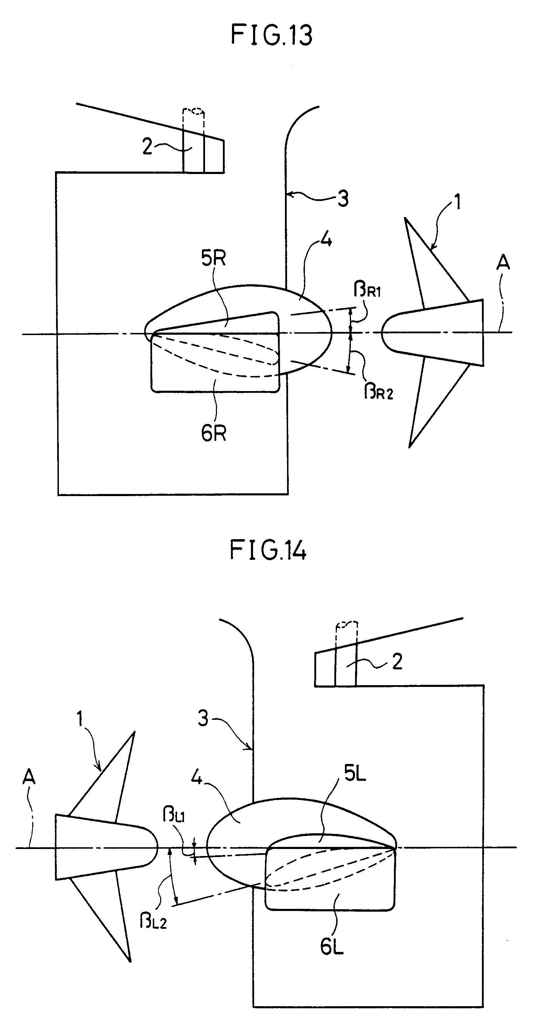

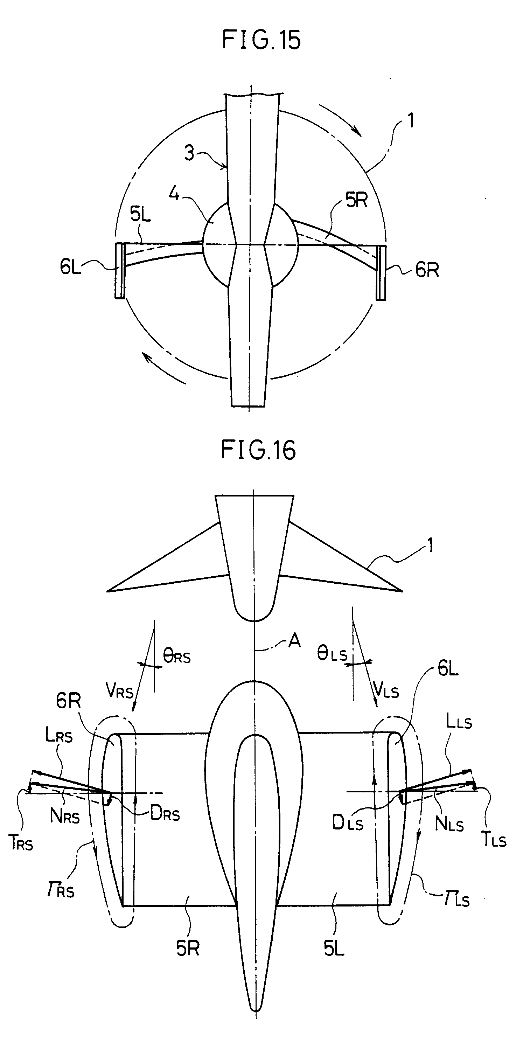

FIGS. 13 to 16 show a third embodiment. In this embodiment, vertical fins 6R, 6L for current rectification are attached to respective distal end portions of the horizontal fins 55, 5L of the first embodiment. The vertical fins 6R, 6L are of asymmetrical aerofoil section so that their respective bulges are positioned outside.

According to such arrangement, propeller backwash streams $V_{RS}$, $V_{LS}$ inflow inclined over inflow angles $\theta_{RS}$, $\theta_{LS}$ in such a way that they expand rearwardly outwardly at both sides from the propeller axis A. Therefore, a circulating current $\Gamma_{RS}$ which is counterclockwise when viewed in bottom plan will occur at the right side, while at the left side a circulating current $\Gamma_{IS}$ which is clockwise when viewed in bottom plan will occur. Accordingly, lifts $L_{RS}$, $L_{IS}$ are produced and forwardly acting thrusts $T_{RS}$ , $T_{IS}$ will occur as component forces of composite forces $N_{RS}$ , $N_{IS}$ produced from a combination of the lifts $L_{RS}$ , $L_{LS}$ and drags $D_{RS}$ , $D_{IS}$ , with the result that rudder drag is reduced.

In the case where vertical fins 6R, 6L of a symmetrical aerofoil section are employed, they, when mounted in parallel to the rudder 3, provide angles of incidence for propeller backwash streams $V_{RS}$ , $V_{IS}$ and thus thrusts will develop. However, by arranging that the vertical fins 6R, 6L are inclined so that they come closer to the rudder 3 as they approach the stern side to provide wider angles of incidence, it is possible to obtain greater forward thrust.

By virtue of the vertical fins 6R, 6L, free vortices which may occur and become diffused at distal ends of horizontal fins 5R, 5L can be further reduced, it being thus possible to decrease induced drag and rectify propeller backwash streams, thereby to reduce total rudder drag.

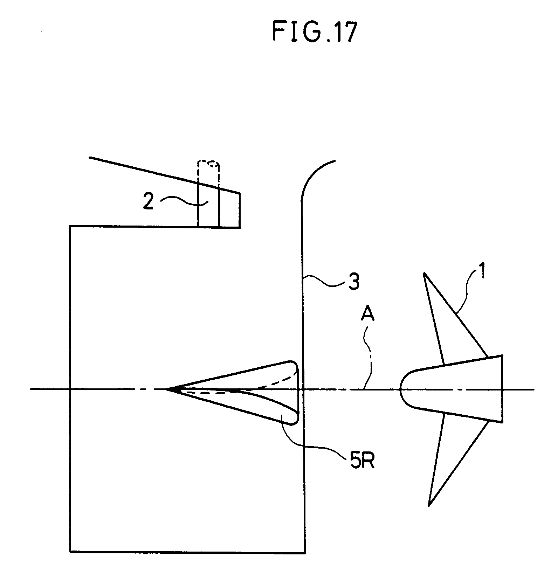

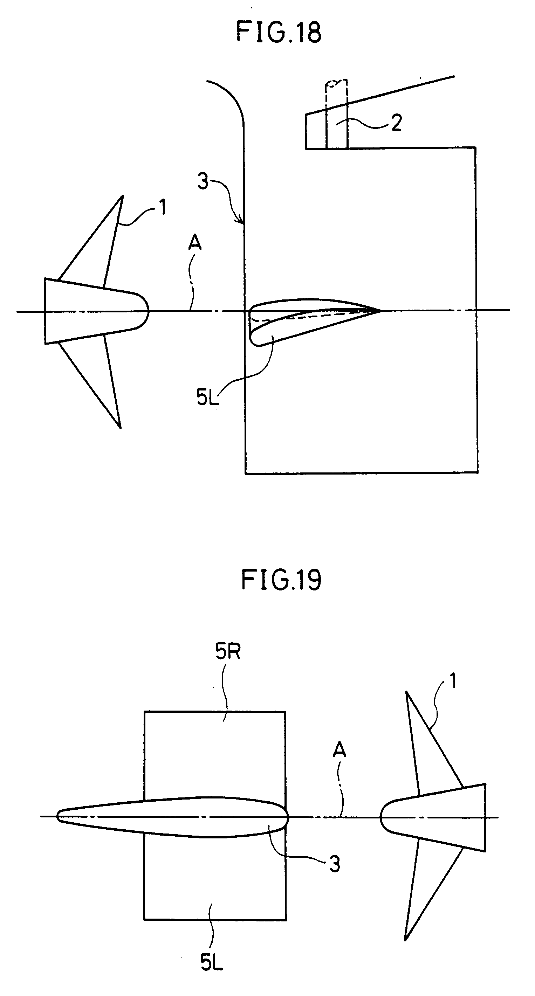

FIGS. 17 to 19 show a fourth embodiment in which bulb 4 in the first embodiment is omitted.

Although the effect of the bulb 4 is not available, horizontal fins 5R, 5L are twisted so as to cope with propeller backwash streams $V_R$, $V_I$ as in previous embodiments, whereby angles of inclination $\beta_R$ , $\beta_L$ for propeller backwash streams $V_R$, $V_I$ which correspond to inflow angles $\theta_R$ , $\theta_L$ are created to provide forward thrust in effective manner, it being thus possible to reduce rudder drag.

## Claims

1. A rudder for a ship which is to be disposed in backwash streams behind a propeller (1) for propelling the ship, comprising a rudder plate (3) and a pair of horizontal fins (5R, 5L) of an aerofoil form in section mounted to the rudder plate (3) at both sides of the axis of said propeller (1) or of a position adjacent thereto, said horizontal fins (5R, 5L) having a proximal end portion located close to the rudder plate (3) and a distal end portion projecting far from the rudder plate, characterised in that the horizontal fins (5R, 5L) have an angle of inclination relative to the propeller axis varied from its proximal end portion toward its distal end portion so as to provide a thrust for forward movement corresponding to an inflow angle of a propeller backwash stream inflowing toward the fin.

2. A rudder for a ship as set forth in claim 1, wherein the horizontal fins (5R, 5L) have an asymmetric aerofoil form in section, one of said fins being so formed that the bulge of its wing is positioned underside at the proximal end side and said bulge is positioned upside at the distal end side, and the other of said fins being so formed that the bulge of its wing is positioned upside.

3. A rudder for a ship as set forth in claim 1, further comprising a spindle-shaped bulb (4) mounted to the rudder plate (3) at a position corresponding to the axis of the propeller (1), said horizontal fins (5R, 5L) being attached at respective proximal ends thereof to said bulb.

4. A rudder for a ship as set forth in claim 3, further comprising vertical fins (6R, 6L) of an aerofoil form in section attached to the distal end portion of the horizontal fins (5R, 5L) respectively.

5. A rudder for a ship as set forth in claim 3, wherein the horizontal fins (5R, 5L) have an asymmetric aerofoil form in section, one of said fins being so formed that the bulge of its wing is positioned underside at the proximal end side and said bulge is positioned upside at the distal end side, and the other of said fins being so formed that the bulge of its wing is positioned upside.

6. A rudder for a ship as set forth in claim 5, wherein one of the horizontal fins (5R, 5L) which is to be so formed that the bulge of its wing is dislocated from underside to upside at the intermediate portion of the wing is constructed to be short in length by eliminating the distal portion where the bulge is to be dislocated.

## Patentansprüche

1. Schiffsruder zur Anordnung in der Rückströmung hinter einer zum Antrieb des Schiffs dienenden Schiffsschraube (1), bestehend aus einem Ruderblatt (3) und einem Paar horizontaler Leitblecne (5R, 5L) mit Tragflügelprofil, die an beiden Seiten der Achse der Schiffsschraube (1) oder an einer angrenzenden Stelle am Ruderblatt (3) angebracht sind, wobei die horizontalen Leitbleche (5R, 5L) mit einem nahegelegenen Endabschnitt versehen sind, der in der Nähe des Ruderblatts (3) zu liegen kommt, und einen abgelegenen Endabschnitt aufweisen, der weit vom Ruderblatt vorspringt, dadurch gekennzeichnet, daß die horizontalen Leitbleche (5R, 5L) vom nahegelegenen Endabschnitt aus zum abgelegenen Endabschnitt relativ zur Schiffsschraubenachseeine unterschiedliche Winkelstellung einnehmen, um zum Zwecke der Vorwärtsbewegung einen Schub zu erzeugen, der einem Einströmwinkel einer in Richtung des Leitblechs einströmenden Rückströmung der Schiffsschraube entspricht.

2. Schiffsruder nach Anspruch 1, dadurch gekennzeichnet, daß die horizontalen Leitbleche (5R, 5L) ein asymmetrisches Tragflügelprofil aufweisen, wobei eines der Leitbleche so ausgebildet ist, daß sich die Ausbauchung des Flügels an der nahegelegenen Seite unten und am abgelegenen Ende oben befindet und daß das andere Leitblech so konstruiert ist, daß die Ausbauchung des Flügels oben zu liegen kommt.

3. Schiffsruder nach Anspruch 1, weiter gekennzeichnet durch einen spindelförmigen Wulst (4), der am Ruderblatt (3) in einer der Achse der Schiffsschraube (1) entsprechenden Stellung angebracht ist, wobei die horizontalen Leitbleche (5R, 5L) jeweils mit ihren nahegelegenen Enden mit dem Wulst verbunden sind.

4. Schiffsruder nach Anspruch 3, weiter gekennzeichnet durch vertikale Leitbleche (6R, 6L) als Tragflügelprofil, die am abgelegenen Endabschnitt der horizontalen Leitbleche (5R, 5L) befestigt sind.

5. Schiffsruder nach Anspruch 3, dadurch gekennzeichnet, daß die horizontalen Leitbleche (5R, 5L) die Form eines asymmetrischen Tragflügelprofils haben, wobei eines der Leitbleche so ausgebildet ist, daß die Ausbauchung seines Flügel sich unter dem nahegelegenen Ende befindet und daß die Ausbauchung am abgelegenen Ende oben angeordnet ist, und wobei das andere Leitblech eine solche Form hat, daß die Ausbauchung seines Flügels oben zu liegen kommt.

6. Schiffsruder nach Anspruch 5, dadurch gekennzeichnet, daß eines der horizontalen Leitbleche (5R, 5L), das so auszubilden ist, daß die Ausbauchung seines Flügels im Zwischenabschnitt des Flügels von unten nach oben verlegt wird, durch Fortfall des abgelegenen Endabschnitts, an dem die Ausbauchung verstellt werden soll, nur eine geringe Länge hat.

## Revendications

1. Gouvernail pour bateau destiné à être disposé dans des écoulements turbulents derrière une hélice (1) de propulsion du bateau, comprenant une plaque de gouvernail (3) et une paire d'ailerons horizontaux (5R,5L) ayant un profil d'aile portante disposés sur la plaque de gouvernail (3) de chaque côté de l'axe de ladite hélice (1) ou à une position adjacente à celui-ci, lesdits ailerons horizontaux (5R,5L) comportant une partie d'extrémité proximale située à proximité de la plaque de gouvernail (3) et une partie d'extrémité distale s'étendant à partir de la plaque de gouvernail, caractérisé en ce que les ailerons horizontaux (5R,5L) ont un angle d'inclinaison par rapport à l'axe de l'hélice variant à partir de leur partie d'extrémité proximale vers leur partie d'extrémité distale de manière à fournir une poussée pour un mouvement vers l'arrière correspondant à un angle d'entrée d'un écoulement de l'hélice entrant vers l'aileron.

2. Gouvernail pour bateau selon la revendication 1, dans lequel les ailerons horizontaux (5R,5L) ont un profil d'aile portante asymétrique, un desdits ailerons étant conformé pour que la saillie de son aile soit positionnée sur le côté inférieur du côté d'extrémité proximale et ladite saillie soit positionnée sur le côté supérieur du côté d'extrémité distale, et l'autre desdits ailerons étant conformé pour que la saillie de son aile soit positionnée sur le côté supérieure.

3. Gouvernail pour bateau selon la revendication 1, comportant de plus une saillie en forme de fuseau (4) disposée sur la plaque de gouvernail (3) à une position correspondant à l'axe de l'hélice (1), lesdits ailerons horizontaux (5R,5L) étant fixés par leurs extrémités proximales respectives à ladite saillie.

4. Gouvernail pour bateau selon la revendication 3, comportant de plus des ailerons verticaux (6R,6L) en forme de profil d'aile portante fixés à la partie d'extrémité distale des ailerons horizontaux (5R,5L) respectivement.

5. Gouvernail pour bateau selon la revendication 3, dans lequel les ailerons horizontaux (5R,5L) ont une forme de profil d'aile portante asymétrique, un desdits ailerons étant conformé pour que la saillie de son aile soit positionnée sur le côté inférieur du côté d'extrémité proximale et ladite saillie soit positionnée sur Le côté supérieur du côté d'extrémité distale, et l'autre desdits ailerons étant conformé pour que la saillie de son aile soit positionnée sur le côté de dessus.

6. Gouvernail pour bateau selon la revendication 5, dans lequel un desdits ailerons horizontaux (5R,5L) qui est conformé pour que la saillie de son aile soit déplacée du côté inférieur vers le côté supérieur de la partie intermédiaire de l'aile est adapté pour avoir une longueur faible en éliminant la partie distale au niveau de laquelle la saillie doit être déplacée.

## FIG.1

## FIG. 2

inflow angle
(from front upside to rear downside)

left-side ( r / R )  right-side ( r / R )

inflow angle
(from front downside
to rear upside )

## FIG. 3

# FIG.4

# FIG.5

# FIG.6

# FIG.7

# FIG. 8

# FIG.9

## FIG. 10

—— rudder equipped with a bulb and twisted horizontal fins

--- rudder equipped with a bulb and flat plate type horizontal fins

## FIG.11

## FIG.12

# FIG.13

# FIG.14

# FIG.15

# FIG.16

FIG.17

## FIG.18

## FIG.19